# EUROPEAN PATENT SPECIFICATION

(11) **EP 4 011 112 B1**
(45) Date of publication and mention of the grant of the patent: **29.11.2023**
(21) Application number: 20745308.5
(22) Date of filing: 17.07.2020
(51) Int. Cl.: H04W 24/02, H04L 41/14, H04L 41/0894, H04L 41/5006

(54) **SYSTEMS, METHODS AND APPARATUSES FOR AUTOMATING CONTEXT SPECIFIC NETWORK FUNCTION CONFIGURATION**
SYSTEME, VERFAHREN UND VORRICHTUNGEN ZUR AUTOMATISIERUNG EINER KONTEXTSPEZIFISCHEN NETZWERKFUNKTIONSKONFIGURATION
SYSTÈMES, PROCÉDÉS ET APPAREILS POUR AUTOMATISER UNE CONFIGURATION DE FONCTION DE RÉSEAU SPÉCIFIQUE AU CONTEXTE

(30) Priority: 05.08.2019 US 201962882782 P
(43) Date of publication of application: 15.06.2022
(73) Proprietor: Nokia Solutions and Networks Oy, 02610 Espoo (FI)
(72) Inventor: MWANJE, Stephen, 84405 Dorfen (DE); SCHMELZ, Christoph, 85540 Haar (DE)
(74) Representative: TBK
(86) International application number: PCT/IB2020/056718
(87) International publication number: WO 2021/024059

(56) References cited:
- EP-A1- 3 104 552
- WO-A1-2018/042232
- FRENZEL CHRISTOPH ET AL: "Dynamic, context-specific SON management driven by operator objectives", 2014 IEEE NETWORK OPERATIONS AND MANAGEMENT SYMPOSIUM (NOMS), IEEE, 5 May 2014 (2014-05-05), pages 1-8, XP032608930, DOI: 10.1109/NOMS.2014.6838256 [retrieved on 2014-06-17]
- FRENZEL CHRISTOPH ET AL: "SON management based on weighted objectives and combined SON Function models", 2014 11TH INTERNATIONAL SYMPOSIUM ON WIRELESS COMMUNICATIONS SYSTEMS (ISWCS), IEEE, 26 August 2014 (2014-08-26), pages 149-153, XP032666611, DOI: 10.1109/ISWCS.2014.6933337 [retrieved on 2014-10-21]
- LOHMULLER SIMON ET AL: "Adaptive SON management using KPI measurements", NOMS 2016 - 2016 IEEE/IFIP NETWORK OPERATIONS AND MANAGEMENT SYMPOSIUM, IEEE, 25 April 2016 (2016-04-25), pages 625-631, XP032918160, DOI: 10.1109/NOMS.2016.7502868 [retrieved on 2016-06-30]

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems, apparatuses and/or methods for automating context-specific network function configuration.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR provides bitrates on the order of 10-20 Gbit/s or higher, and can support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.
FRENZEL CHRISTOPH ET AL, "SON management based on weighted objectives and combined SON Function models", 2014 11TH INTERNATIONAL SYMPOSIUM ON WIRELESS COMMUNICATIONS SYSTEMS (ISWCS), IEEE, (20140826), doi:10.1109/ISWCS.2014.6933337, pages 149 - 153, describes that management and operation of a Self-Organizing Network (SON)-enabled mobile network still requires considerable human effort. On the one hand, SON Functions need to be configured through low-level parameters in order to control the optimization of the network. On the other hand, an operator wants to steer the system with solely technical objectives, and the underlying network should be adapted accordingly. This gap in network management between technical objectives and SON Functions is overcome by choosing the best values for the SON Functions' configurations automatically.

### SUMMARY:

A method, a context derivation function, CDF, and a non-transitory computer readable medium are provided as specified by the appended claims. According to some aspects, there is provided the subject matter of the independent claims. Some further aspects are defined in the dependent claims. The embodiments that do not fall under the scope of the claims are to be interpreted as examples useful for understanding the disclosure.

### BRIEF DESCRIPTION OF THE DRAWINGS:

For proper understanding of example embodiments, reference should be made to the accompanying drawings, wherein:
Fig. 1 illustrates an example of context-aware adjustment of function configuration parameter values (FCVs);
Fig. 2 illustrates an example diagram of the context derivation function for context-aware network configuration, according to an embodiment;
Fig. 3 illustrates an example flow diagram for deriving the context-space and network and automation function configurations from a weighted objective model, according to certain embodiments;
Fig. 4 illustrates an example of context classes for the "time" and "location" contexts, according to an embodiment;
Fig. 5 illustrates an example of context classes, according to certain embodiments;
Fig. 6 illustrates an example flow diagram of a method, according to an embodiment; and
Fig. 7 illustrates an example flow diagram of a method, according to an embodiment; and
Fig. 8 illustrates an example block diagram of an apparatus, according to an embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for automating context-specific network function configuration, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as merely illustrative of the principles and teachings of certain example embodiments, and not in limitation thereof.

Certain embodiments described herein may relate to Cognitive Autonomous Networks (CAN) in radio access networks (RANs), such as 5G networks and/or other previous or future generations of wireless networks. More specifically, some embodiments may relate to the automated derivation of context-specific configuration policies for network auto-configuration.

Auto-configuration involves the use of automation functions to manage the configuration of network parameters or to adjust the behavior of automation functions. Each Network Automation Function (NAF) may be characterized by what may be referred to as Function Configuration Parameters (FCPs). These FCPs are the parameters that control the behavior of the NAF. For Self-Organizing Networks (SON)-style control-loop type NAFs, the parameters may be designed into an algorithm and include parameters, such as the thresholds that determine the points at which different solution options are taken by the algorithm. On the other hand, for Cognitive Functions (CFs), such parameters may be the hyper-parameters that control the learning, such as a neural network's number of hidden layers or the exploration-exploitation control parameters for reinforcement learning.

The expectations from the network or the NAFs may not be the same at all time-space operational points within a mobile network, but may depend on a certain context. The different contexts represent changes in at least one of the dimensions of interest. Examples for such dimensions may include environmental information such as the season of the year or time of day, network information such as the cell locality which can be urban, rural or semi-urban, or service related information such as traffic patterns or user speed.

Contexts may also be function specific, which may require the functions to be differently configured depending on the context. Examples of these differences may include the function type or its scope. The function type can differentiate between functions according to their nature. For example, the function type may differentiate between physical NAFs for functions that change the physical characteristic like antenna tilts and power, and logical NAFs for those that change logical parameters like handover settings. The scope may define the area of control of the function, in which case functions may be differentiated among intra-cell NAFs like congestion control, inter-cell NAFs like load balancing or Automatic Neighbour Relation (ANR), or multi-cell NAFs which may include interference management or physical cell identity (PCI) assignment.

For each of the dimensions of interest, the context may describe a subspace of that dimension. For example, some of the most widely used or considered contexts may include the time of day, the location of the cell, the cell type, and/or the network states.

For the time-of-the-day context, the key performance indicator (KPI) targets and their importance may be differentiated for peak traffic periods, e.g., the time from 08:00 to 12:59, in comparison to periods of normal traffic, e.g., the time from 13:00 to 22:59, or periods with very low traffic, e.g., the time from 23:00 till 07:59.

For the location of the cell context, the KPI targets and their importance may be different in urban, suburban, and rural areas, due to differences in the number of users, behavioral patterns of the users, and the nature of the network, e.g., in terms of the available coverage and capacity.

For the cell type context, different types and sizes of cells can be availed with different coverage and capacity opportunities and expected user behavior, so it may be critical to contextualize these differences, e.g., as macro cell, micro outdoor cell, or indoor cell.

For the network states context, the network may be in different performance or fault states, each of which may require a different kind of response from the automation function(s). These states may be identified by the nature of the alarm status, e.g., major failure, critical failure, etc., or by the performance states like congested, outage, and/or according to the KPI values.

Given this variance in contexts, it is important that the network and the automation functions are both configured in a context-specific way and that the derivation of contexts is automated given the possibility that they will be many and varying.

The behavior of a Network Automation Function can be changed by adjusting the Function Configuration Parameters Values (FCVs). That is, depending on the FCVs, the NAF may adjust the network configuration parameters in a different manner. Typically, in SON systems, one default FCV set is used and that is often the one supplied by the SON function manufacturer. However, networks have infinitely many contexts which all cannot be addressed by a single configuration setting. Ideally, changes to a KPI target or to the context involve adjusting the behavior of the NAF in such a way that the NAF can positively contribute to the changed KPI target.

The NAF should derive a policy that is context specific and that considers the complete context space. Use of an incomplete context-space may, for example, imply that race conditions among different objectives cannot be resolved. Existing studies have suggested that the operator defines such a context model that is then used by the automation functions. However, it is practically impossible for the operator to define the complete model given the diversity of contexts. Besides, the usage of the context for function or network configuration is not published in the case of learning based (or cognitive) network functions.

Moreover, the contexts may vary significantly in the case of slicing in 5G. Each customer or slice owner is associated with a service level agreement (SLA) that specifies the performance targets to be achieved and the conditions thereof. On a typical network, there will be many slices at any given time and the set of slices may change over time, i.e., slices will be added, adapted and decommissioned as necessary. Each change in the network slices will be accompanied with new requirements and conditions. This flexible change in the context space implies that the operator will be incapable of specifying and updating the complete state-space.

It is, however, important to identify potential interactions and conflicts among SLAs by identifying those contexts/conditions under which two SLAs have conflicting targets. This entails knowledge of the complete state-space from which the conflicts can be identified. And it is easier for the operator if they simply state the performance objectives and conditions (which are also stated in the service-level agreements) so that some automation function derives the context-space, which may then be used to find objective conflicts and context-specific configurations.

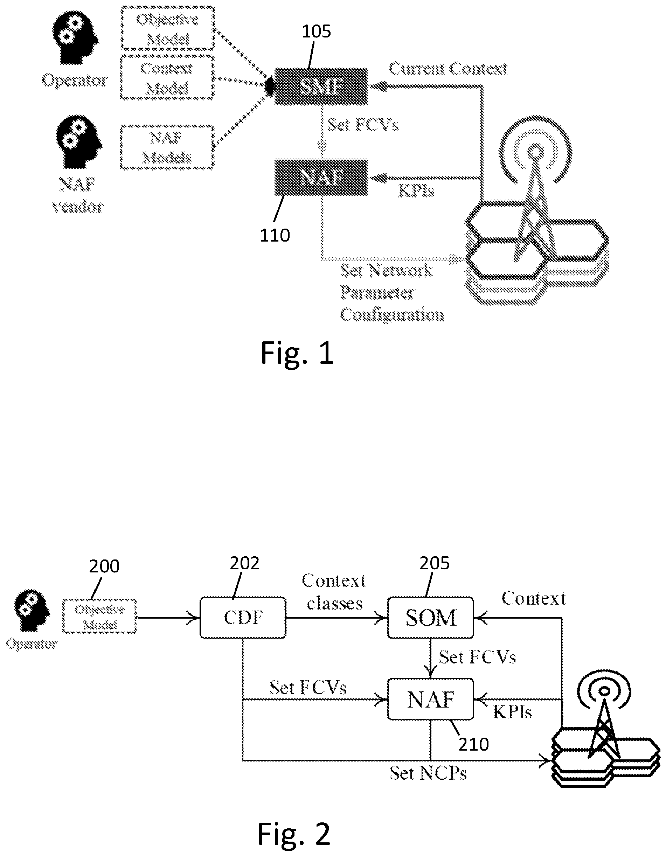

For SON functions, the change of behavior can be achieved by adjusting the FCV sets using a SON Management Function (SMF) that manages the SON Functions. Fig. 1 illustrates an example of the construct of objective-driven SON management, where an SMF 105 (denominated as "SON objective manager") manages the SON functions, e.g., the NAF 110, and is responsible for setting the Functions' Configuration Parameter Values (FCVs). Accordingly, Fig. 1 depicts an example of context-aware adjustment of FCVs.

Existing concepts have defined objective models as the statement of the KPI targets in particular contexts or conditions. Conventionally, the context model may be developed and written by the operator and then submitted to the SOM.

The KPI objective is the expected optimization action for the specific KPI, i.e., either minimizing over, maximizing over, or fitting to a value range. The KPI targets are specifications of the objectives and the values or value ranges that should be achieved by the network automation functions either as individual entities or as a group. The typical examples for KPI objectives and targets are given in Table 1 below.

**Table 1: typical examples for KPI targets**

| KPI | Objective | KPI Target | Description |
|---|---|---|---|
| Dropped call rate | Minimize | < 2.5% | the percentage of dropped voice calls due to, e.g., failed handovers or bad radio conditions |
| Cell load | Minimize | < 90% | the used radio resources per cell or sector |
| Handover success rate | Maximize | > 99.5% | the percentage of successful handovers between cells or sectors |
| Energy consumption | Minimize | < 80% | the average consumed energy by the base station compared to the maximum energy consumption |

The KPIs may be prioritized among each other depending on their expected effects on the offered services. For example, since energy consumption KPIs focus on the optimization of operational expenses while dropped calls directly translate into poor service quality, the dropped-calls KPI targets are likely to be prioritized higher than energy saving KPI targets in scenarios where premium services are offered.

The context model provides a description of the context properties, i.e., it defines the domain or possible values of the context properties. For example, consider that the time and location contexts are respectively defined over the ranges [00:00, 23:59] and {wilderness, rural, semi-urban, urban}. The corresponding context model would be: time: [00:00, 23:59]; location: {wilderness, rural, semi-urban, urban}. Existing studies have assumed that the context-model was static so it could be defined once and used endlessly. This is not the case where new slices are continuously added to or removed from the network.

The objective model describes the targets that should be achieved by the Network Management Automation (NMA) system and their relative prioritizations. Using the objective model, the operator defines their prioritization of the KPI targets for different conditions, creating what are referred to as technical objectives. A technical objective is a specific combination of KPI targets, operating conditions and a prioritization measure. The objective model formalizes the operator's desired outcomes of the automation processes. Examples of such required outcomes highlighting the priority, the objective, the KPI and the conditions are listed in Table 2 below. To formalize these expectations, the objective model may be implemented as a set of three-part "IF... THEN... WITH" rules of the form: **IF** condition **THEN** KPI target **WITH** priority measure.

**Table 2: Examples of desired outcomes highlighting the conditions, objectives, KPI targets and prioritization**

| No. | Priority | Objective | KPI target | Conditions |
|---|---|---|---|---|
| 1 | With a very high priority, | minimize | the cell load to less than 80% | in an urban location during peak hours |
| 2 | With a high priority, | minimize | the dropped call rate to less than 2% | in an urban location |
| 3 | With a moderately high priority, | maximize | the handover success rate to more than 98% | during peak hours |
| 4 | With a moderate priority, | minimize | energy consumption to less than 40% | in non-urban locations |
| 5 | With a very low priority, | minimize | energy consumption to more than 50% | during periods with low traffic |

The condition part is a logical formula over predicates, which evaluates the conditions properties to determine those to which the rule applies. This allows to specify under which conditions, e.g., time periods or cell locations, a given prioritization of KPI target is active. The case of a general objective that is always true can also be represented in the form of such a rule by using an empty condition which will always evaluate to a logical true.

The KPI target, as discussed above, specifies the KPI that the system should optimize and the desired value or value range to be achieved. The priority measure encodes the relative importance of the KPI target to the operator in the specific conditions. One solution is to prioritize the rules using values with non-bounded limits, i.e., one objective each with priority values 1, 2, 3, ...., etc. This, however, raises the challenge that managing the prioritization requires a strict ordering of the rules, which then makes the objective management very manual and tedious given the number of potential rules.

A better solution would be to use weights with bounded limits which makes it easier to combine different objectives and ensures that where the targets may be conflicting in a given condition, the weights can be used to prioritize the rule that takes precedence. Such a prioritization may include, for example, encoding each rule with a weight in the range [0,1] that indicates the degree to which the rule may be prioritized, i.e., the degree to which the rule is important. Therein, a value of 0 may indicate that the achievement of the target is unimportant, while a value of 1 may indicate that the target must be achieved regardless of other constraints. Taking five discrete priority levels of very low, low, moderate, high and very high to be the weight ranges {[0.0-0.2), [0.2-0.4), [0.4-0.6), [0.6-0.8), [0.8-1.0]}, examples of such a machine-readable format may be as illustrated by the formal objective rules in Table 3 below. Alternatively, the prioritization may be described in terms of utility functions.

**Table 3: Examples of objectives and their respective formal technical objectives defined using prioritization weights**

| No. | Desired outcome | Formal objective rule | |
|---|---|---|---|
| 1 | With a very high priority, minimize the cell load to less than 80% in an urban location during peak hours | **IF** | time in [08:00, 17:59] ***AND*** location = urban |
| | | **THEN** | cell load < 80% |
| | | **WITH** | 0.9 |
| 2 | With a high priority, minimize the dropped call to less than 2% rate in an urban location | **IF** | location = urban |
| | | **THEN** | Drop Call Rate < 2% |
| | | WITH | 0.7 |
| 3 | With a moderately high priority, maximize the handover success rate to more than 98% during peak hours | **IF** | location = urban |
| | | **THEN** | Drop Call Rate < 2% |
| | | WITH | 0.7 |
| 4 | With a moderate priority, minimize energy consumption to less than 40% in non-urban locations | **IF** | ***NOT*** location = urban |
| | | **THEN** | energy consumed < 40% |
| | | WITH | 0.5 |
| 5 | With a very low priority, minimize energy consumption to more than 50% during periods with low traffic | **IF** | ***NOT*** time in [08:00, 17:59] |
| | | **THEN** | energy consumed < 50% |
| | | WITH | 0.1 |

The operator may also impose an extra constraint that, for a given condition, the weights of the KPI rules should always sum up to 1. This ensures that the degree of importance of each objective is stated relative to the other objectives that apply to that conditions as opposed to a generic statement of how important the objective is. For example, one could consider that in a given condition, the call-drop rate, energy saving, and cell load have the targets 0.3, 0.4 and 0.3, respectively, i.e., that saving energy is more important compared to minimizing overload and call drops. This might be a possible objective in multi-layer scenarios where the cell overlays assure coverage which makes call drops unlikely, and where adequate capacity is also available that congestion events are minimized. In that case, a configuration that fulfils the energy saving objective will be favored, but only if it does not affect any of the other targets.

Meanwhile, the objective model does not need to be complete, i.e., not all KPI targets need to be defined in all contexts. Since the KPI targets are defined globally, it follows that for those conditions where no specific prioritized objectives are defined, the system considers the default global objective defined in the KPI target and considers all KPIs in such a context to be equally important.

The prioritization of KPI targets does not need to be unambiguous in some specific context. It is acceptable for one KPI target to have two different assigned priorities or weights, which can be the case if two objective rules with overlapping conditions and the same KPI target are triggered. An overlap thereby means that at least one specific context exists in which both conditions are true. In such cases, this conflict is resolved by solely considering the higher priority KPI target. For instance, if both energy consumption rules in Table 3 (rules 4 and 5) are included in the objective model, the two will conflict (i.e., will both be true) for non-urban areas outside the time period [08:00, 17:59]. In this case, rule 4 will take precedence since it has a higher priority (higher weight) even if its desired target is actually lower than rule 5.

It is noted that rules are not the only way of modelling the technical objectives. An alternative solution for modelling the technical objectives is to define a utility function which maps the contexts to utilities for the KPI targets. Whereas priorities only allow to rank the KPI targets according to their importance, these utilities would allow for making a trade-off between the satisfaction of different KPI targets. This is especially useful if there are conflicting KPI targets like the minimization of the energy consumption and the minimization of the cell load. However, the elicitation of the utility function may require much more effort than the writing of objective rules.

With a complex 5G network, the possible contexts expand exponentially, and introduction of slicing adds a need for flexibility in defining the state space and for adjusting the defined state-space. Yet an incomplete state-space is not useful, especially for resolving conflicts among objectives. It is therefore desirable to automate the derivation of the network context-space as provided by example embodiments described herein.

Certain embodiments provide a new entity, which may be referred to herein as the Context Derivation Function (CDF), and a method for the automated and cognitive derivation of operational and network context and configuration. In some embodiments, the CDF may execute or cause the automated derivation of the network context space, the automated derivation of context-specific network automation functions configuration policies, and/or the automated derivation of context-specific network configuration policies.

For example, one embodiment provides approaches for how context-aware configuration can be implemented to configure both cognitive and non-cognitive NAFs. Further, an embodiment provides a solution for how the context model can be derived from the objective model to eventually compute network and function configuration policies.

Fig. 2 illustrates an example diagram of a process for context-aware network configuration, according to some embodiments. As illustrated in the example of Fig. 2, given an objective model 200 as input, the CDF 202 may derive a context model, for example, including context regions and classes. The context model can be sent to the existing functions like the SON objective Manager (SOM) 205 or may be used internally within the CDF 202. Subsequently, the CDF 202 may derive Function Parameters Configuration policies. Alternatively or additionally, the CDF 202 may derive network Parameters Configuration policies.

Given a NAF 210, for example a SON Function that controls network parameters, it shall be ensured that the behavior of this NAF 210 accounts for changes in context. Moreover, the different contexts may have different performance targets and the different KPI targets may even be competing against each other, implying that they cannot be achieved together.

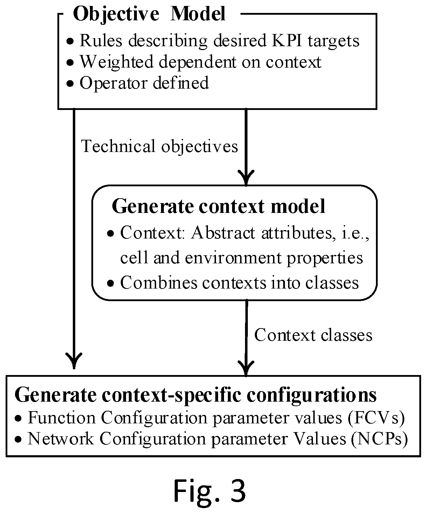

To account for the different contexts and KPI targets priorities, a Cognitive Autonomous Network applying the CDF's context-aware auto-configuration mechanism may select Function Configuration Parameter Values (FCV) according to the objective model and context class. Fig. 3 illustrates an example for deriving the context-space and Network and Automation Function configurations from a weighted objective model. As illustrated in Fig. 3, the context classes may be the combinations of different cell and environment attributes while the objective model may describe how different rules on KPI targets are weighted depending on contexts.

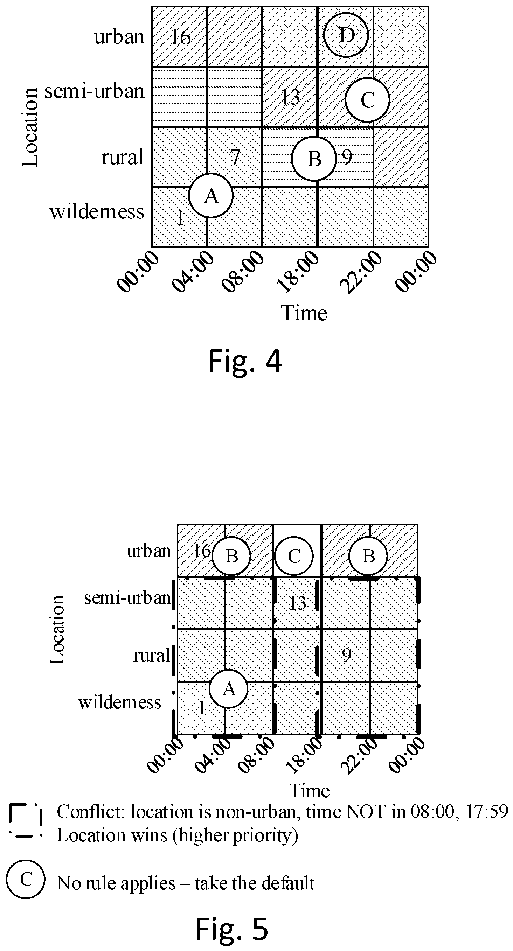

According to certain embodiments, the context model may be automatically derived from the objective model, even without the object model being complete. Owing to the possibly infinitely large context-space in networks, it is inefficient to derive configurations that are specific to each possible context combination. Instead, it may be desirable to base the configuration decisions of the CF on combinations of the contexts. Correspondingly, in some embodiments, the different contexts can be combined into context classes each of which may require a different action. In the case of the time and location example above, the example context classes are the four classes A, B, C. D illustrated in the example of Fig. 4. As illustrated in the example of Fig. 4, the context classes may be interpreted under normal conditions as four levels of traffic corresponding to very low, low, moderate and high traffic.

In some embodiments, to derive the context classes, the system may build up the complete context-space, i.e., a listing of all possible expected contexts which are derived from the objective model. Each context property in the objective model may represent a dimension in the context-space which can be continuous (like time with the scale [00:00, 23:59]) or discrete (like the location with the scale over the values wilderness, rural, semi-urban and urban).

For manageability, the context-space may be divided into a finite number of context-space regions, or simply context regions. Each context region is a specific overlap of all the objective rules and as a coordinate in the context-space, represents a region in the context-space that is a specific combination of sub-divisions of all context dimensions, i.e., a sub-space of the context-space in which the NMA system should behave similarly. Some examples of such regions are shown in Fig. 4, i.e., the regions 1, 7, 9, 13 and 16, where Region 16 represents the tuple (time in [00:00, 03:59], location = urban) and context class A has 7 context regions including regions 1 and 7.

The number of regions can become very large and may not be useful for meaningfully grouping function or network configurations according to contexts. For instance, a context model with ten parameters and one threshold for each parameter results in 210 regions. For this reason, regions with the same expected behavior for a specific KPI can be combined. Correspondingly, this results in the definition of a context class type as the combination of dimensions (e.g., the context-class type "time-and-location") and the context class as the group of regions with same targets and priority for a given context class type. Note that the regions in a context class do not need to be congruent in any or all dimensions. Fig. 4, for instance, shows four context classes (A, B, C and D) for the context class type "time and location", where the regions in class B are not congruent.

According to certain embodiments, the context-class types may be derived from the automation functions which define the different dimensions and regions of interest. An Energy Saving management (ESM) function may, for example, define three regions of interest that indicate aggressive, active or laissez-faire energy saving based on the time of the day and location as the dimensions of interest. However, even where such functional based definitions are possible, the context-class types are initialized by the operator as part of the objective setting process, i.e., the operator may specify the contexts of interest and then set the desired targets in those contexts. It is noted, however, that the context space defined in this form by the operator does not need to be complete, it may be defined only for the contexts for which the operator has specific KPI targets. Then, the complete delineation of the context space may be left to the automated context definition which derives the context classes and their types from the objective model and, where applicable, also using the functions. In the following, an example is described of how contexts can be derived from the objective model.

In an embodiment, computing the context classes may include first computing the context regions. According to some embodiments, the context regions can be computed by first partitioning the dimensions of the context-space according to the conditions of the objective rules: for each predicate p, the dimension of the context property in p is partitioned according to the value in p. The partitioning may be further refined with each rule that has a predicate with the same context. For instance, for the predicate of "time in [08:00, 17:59]", the dimension for the context property time may be split into three partitions: [00:00, 07:59], [08:00, 17:59], and [18:00, 23:59]. Then, if another rule has the predicate "time in [22:00, 03:59]", the first and third portions of the dimension for the context property time may be split into two partitions each, to give the full set of time contexts as {[00:00, 03:59], [04:00, 07:59], [08:00, 17:59], [18:00, 21:59] and [22:00, 23:59]}. After partitioning the dimensions for all objective rules, the regions may be defined as the elements of the cross product of the partitions of all dimensions. Fig. 5 illustrates an example of the "Location+Time" context classes for Energy savings as derived from objective model for objectives {IF NOT location = urban THEN energy consumption < 40% WITH 0.5 and IF NOT time in [08:00, 17:59] THEN energy consumption < 50% WITH 0.1}. In the example of Fig. 5, for instance, the combination of the contexts "time in [00:00, 03:59]" and location =wilderness result in context region 1.

After creating the regions, the context classes may be created in considerations of the KPIs in the objective rules. First, a context-class type may be created for each KPI by combining the context-space's dimensions of interest for the KPI that are represented in the objective rules. For example, for energy saving with the two rules 4 and 5, the important dimensions are location and time and so the two are combined to create a context-class type.

To derive the context classes for the specific KPI, the objective rules may be mapped to the regions to mark each region with the expected target and priority. As stated above, where there is a conflict among the prioritized targets, the higher priority rule is taken. For example, rule 4 may take priority in the non-urban areas in the time outside [08:00, 17:59]. The context classes may then be identified as groups of context regions that have the same targets and priority. For the energy consumption KPI, these are identified as illustrated in the example of Fig. 5 as context-class A for the target EC<40% with weight 0.5 (all time, non-urban areas) and context-class B for the target EC<50% with weight 0.1 (urban locations, non-working hours).

Any context regions that remain unmarked after applying the rules may also be classified as a single context class to apply a default global KPI target. At least two options may be possible for setting the default global KPI target and can be configured by the operator. If the governing assumption is that all KPI targets are moderate priority unless specifically stated, then the default global KPI target may have median priority (i.e., weight=0.5). Alternatively, however, if it is interpreted that all rules take the lowest priority unless otherwise stated, then default global KPI target may have the lowest possible weight.

After computing the context classes, the configuration policies may be derived, i.e., the function configurations or function behavior models for each context class may be selected. In the case of SON, a SON Function may be designed and implemented with a pre-set number of operating modes, each of which indicates a different kind of behavior. The ESM SON Function, as discussed above for example, may have the three operating modes - aggressive, active and laissez faire. For such SON Functions, this procedure may include matching the possible modes with the computed context classes, which for ESM implies matching the context classes (e.g., in Fig. 5) to the three defined modes. This may be implemented by updating the policy framework of the NMA system with the configurations indicating this matching, e.g., aggressive ESM for class A, active ESM for class B and laissez faire ESM for class C. The corresponding SON Function may then activate the respective Function Configuration Parameters Value (FCV) set for the specific mode in each of the context classes.

In certain embodiments, where the SON Function does not define the operating modes, but where more than one context-class has been identified for that SON Function's KPI(s), the cognitive function that manages the SON Function configuration may learn the appropriate FCV sets for each of the context-classes. In an embodiment, a candidate for such learning may be a Reinforcement learning (RL) agent that tests different sets of FCVs for a specific SON Function to identify the best set in a specific context class. It is noted, however, that a model-based FCV configuration may also be feasible, albeit with great effort in modelling the SON Functions to derive the FCV-set to network performance relationships.

One embodiment may include the case of cognitive network automation where the CF directly controls the network configuration values. Therein, there is no need for the intermediate procedure of computing the FCVs and instead the CF may update its internal policy function to directly respond to the context changes. Such an internal change may imply either learning using different hyper parameters or using the same hyper parameters but learning different models or NPVs. An example is where an RL function is used for ESM, and the three ESM context-classes are interpreted as three modes requiring different behaviours (i.e., the aggressive, active and Laissez fire behavioural types). Here, the RL agent may have to learn using different learning hyper-parameters for each of the three context classes. For example, such an RL agent may use a larger neural network or Q-table for the aggressive class to ensure that it learns a large and detailed model for activating or deactivating cells at a very high granularity for the time between evaluations and the periods for which cells may be activated or deactivated. For the laissez-faire class on the other hand, the RL agent may apply a regression model that looks for only the time periods in which there is too much resource redundancy and do nothing in all the other time periods.

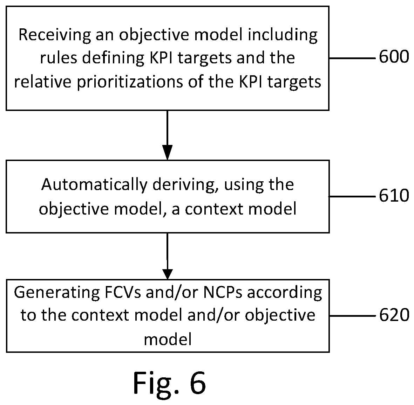

Fig. 6 illustrates an example flow diagram of a method for automatically generating context-specific network function configuration, according to an embodiment. In certain example embodiments, the flow diagram of Fig. 6 may be performed by a network entity or network node in a 3GPP system, such as LTE or 5G NR. For instance, in some example embodiments, the method of Fig. 6 may be performed by a CDF as depicted in the example diagram of Fig. 2. According to certain examples, the CDF may be configured to automatically derive a network context space, automatically derive context-specific network automation functions configuration policies, and/or automatically derive context-specific network configuration policies. Therefore, in certain embodiments, the method may include any of the procedures performed in Fig. 2.

As illustrated in the example of Fig. 6, the method may include, at 600, receiving an objective model including rules defining KPI targets and the relative prioritizations of those KPI targets for a communications system. For example, in an embodiment, the objective model may be used to define the desired prioritization of KPI targets for different conditions. Thus, in an embodiment, the objective model may be implemented as a specific combination of operating conditions, KPI targets, and a prioritization measure. Tables 2 and 3 discussed above illustrate examples of such an objective model.

It is noted that, according to certain embodiments, the objective model received at 600 does not necessarily need to be complete, i.e., not all KPI targets need to be defined in all contexts. For instance, for those conditions where no specific prioritized objectives are defined, the default global objective defined in the KPI target may be considered and all KPIs in such a context may be deemed to be equally important. In some embodiments, the prioritizations of the KPI targets may be indicated using weights with bounded limits, where the weights can be used to prioritize the KPI targets that take precedence. For example, in an embodiment, each of the KPI targets may be assigned a weight in the range [0,1] that indicates the degree to which the rule is important. In such an example, a value of 0 may indicate that the achievement of the KPI target is unimportant, while a value of 1 may indicate that the KPI target must be achieved regardless of other constraints.

As further illustrated in the example of Fig. 6, the method may further include, at 610, automatically deriving or determining, using the received objective model, a context model including at least a description of the properties of one or more contexts. In an embodiment, the context model may be considered to define the domain or possible values of the context properties. For example, in some embodiments, the contexts may include the time of day, a location of the cell, the cell type, and/or network states, as discussed in detail above.

According to some embodiments, the different contexts may be combined into context classes, such that each of the context classes may require a different action. Fig. 4 discussed above illustrates one example of such context classes.

According to certain embodiments, the method may include determining the context classes by building a complete context-space that may include a listing of possible contexts that may be derived from the context model. In an embodiment, each context property in the context model may represent a dimension on the context-space, for example, which may be continuous or discrete. In some embodiments, the method may include dividing the context-space into a finite number of context-space regions or context regions. Each context region may represent a region in the context-space having the same KPI targets and/or priorities. In addition, in some embodiments, the method may include combining context regions having the same expected behavior for a certain KPI. As such, a context class type may be defined as the combination of dimensions, and the context class may be defined as the group of regions with the same targets and priority for a given context class type. In an embodiment, the context class type may be derived from the automation functions that define the different dimensions and regions of interest. As one example for an ESM function, three regions of interest may be defined as aggressive, active, or laissez-faire energy saving based on the dimension of interest being the time of day and/or location.

In view of the above, according to an embodiment, the automatically deriving of the context model at 610 may further include computing the context regions. In an embodiment, the computing of the regions may include partitioning the dimensions of the context-space according to the conditions of objective rules, e.g., where for each predicate p, the dimension of the context property in p is partitioned according to the value in p. The partitioning may be further refined with each rule that has a predicate with the same context. After partitioning the dimensions for all objective rules, the automatically deriving of the context model at 610 may include defining the regions as the elements of the cross product of the partitions of all dimensions.

After creating the regions, in an embodiment, the automatically deriving of the context model at 610 may further include creating the context classes in consideration of the KPIs in the objective rules. First, a context-class type may be created for each KPI by combining the context-space's dimensions of interest for the KPI that are represented in the objective rules. To derive the context classes for the specific KPI, in an embodiment, the automatically deriving of the context model at 610 may further include mapping the objective rules to the regions to mark each region with the expected KPI target and priority. As discussed above, if there is a conflict among the prioritized KPI targets, the higher priority target may be taken. Any context regions that remain unmarked after applying the rules may be classified as a single context class to apply a default global KPI target. For example, if the governing assumption is that all KPI targets are moderate priority unless specifically stated, then the default global KPI target can have median priority. Additionally or alternatively, if it is interpreted that all rules take the lowest priority unless otherwise stated, then default global KPI target may have the lowest possible weight.

In certain embodiments, the method may also include, at 620, generating or selecting at least one of function configuration parameter values (FCVs) and/or network configuration parameter values (NCPs) according to the context model and/or objective model. According to certain embodiments, an automation function may be implemented with a pre-set number of operating modes, each of which indicates a different kind of behavior. For example, the ESM SON function discussed above, may have the three operating modes - aggressive, active and laissez faire. In this case, the possible modes may be matched with the computed context classes. In an embodiment, the policy framework of the network may be updated with the configurations indicating this matching. Then, in one embodiment, the generating of the FCVs and/or NCPs at 620 may include activating the respective FCV set for the specific mode in each of the context classes. In another embodiment, where the operating modes are not defined, but where more than one context-class has been identified, the generating of the FCVs and/or NCPs at 620 may include learning the appropriate FCV sets for each of the context-classes. For example, the learning may be done via a Reinforcement Learning (RL) agent that tests different sets of FCVs to identify the best set in a specific context class.

According to some embodiments, the method may also include adjusting and/or optimizing a behavior of automation functions of the network using the generated FCVs and/or NCPs. For example, FCVs may be used to adjust the behavior of automation functions, such as how aggressive they should be in implementing their changes. On the other hand, NCPs may be activated directly onto the network to adjust its behavior, such as to adjust and improve handover performance.

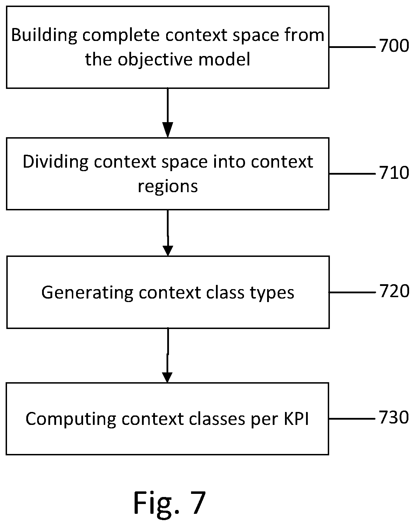

Fig. 7 illustrates an example flow diagram of a method for automatically deriving or determining the context model, according to an embodiment. For instance, Fig. 7 may be considered to illustrate examples of the procedures used to execute procedure 610 of Fig. 6. As illustrated in the example of Fig. 7, the method may include, at 700, building the complete context space from the objective model, for example, including a listing of contexts and their subdivisions. In an embodiment, the method may then include, at 710, dividing the context space into context regions. Each of the regions may be considered as a context coordinate or a specific combination of sub-divisions of all context dimensions. In an embodiment, the method may also include, at 720, generating context-class types, for example, as combination of context-space dimensions. According to certain embodiments, the method may further include, at 730, computing the context classes per KPI, where the context classes may be groups of context-regions with the same combination of KPI targets and priorities. The complete set of context classes may constitute the context model.

At least Figs. 2, 3, 6, and 7 include flow diagrams that illustrate example embodiments of the present disclosure. The procedures described in these figures may be performed, for example, by a network entity, network node, base station, CDF, or other processing device. Some of the procedures illustrated may be performed sequentially, in parallel or in an order other than which is described. Some of the procedures described may also be repeated. It should be appreciated that not all of the techniques described are required to be performed, that additional techniques may be added, and that some of the illustrated techniques may be substituted with other techniques.

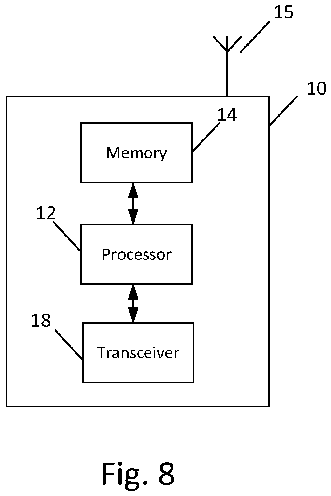

Fig. 8 illustrates an example of an apparatus 10 according to an embodiment. In an embodiment, apparatus 10 may be a node, host, or server in a communications network or serving such a network. For example, apparatus 10 may be a base station, a Node B, an evolved Node B (eNB), 5G Node B or access point, next generation Node B (NG-NB or gNB), CU of a gNB, WLAN access point, serving gateway (SGW), mobility management entity (MME), a data management entity (e.g., UDM), and/or OAM entity associated with a radio access network, such as 5G or NR. In one example, apparatus 10 may represent a CDF as depicted in Fig. 2.

As illustrated in the example of Fig. 8, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 8, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink). It should be noted that the inclusion of antenna(s) 15 is optional as, in certain embodiments, there may be implementations that do not include any antenna. For instance, some embodiments may be included in a structure other than a base station or gNB in which an antenna is not included.

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or entity, such as a CDF, or the like. According to certain embodiments, apparatus 10 may be controlled by memory 14 and processor 12 to perform the functions associated with any of the embodiments described herein. For example, in some embodiments, apparatus 10 may be configured to perform one or more of the processes depicted in any of the flow charts or signaling diagrams described herein, such as the flow diagram illustrated in Fig. 6. For instance, in some examples, apparatus 10 may correspond to or represent the CDF depicted in Fig. 2. In certain embodiments, apparatus 10 may be configured to perform a procedure for generating context-specific network function configuration.

In one embodiment, apparatus 10 may be controlled by memory 14 and processor 12 to receive or obtain an objective model including rules defining KPI targets and the relative prioritizations of those KPI targets for a communications system. For example, in an embodiment, the objective model may be used to define the desired prioritization of KPI targets for different conditions. Hence, in an embodiment, the objective model may be implemented as a specific combination of operating conditions, KPI targets, and a prioritization measure.

According to certain embodiments, the objective model received may or may not be complete, i.e., not all KPI targets need to be defined in all contexts. For example, for those conditions where no specific prioritized objectives are defined, the default global objective defined in the KPI target may be considered and all KPIs in such a context may be deemed to be equally important. In some embodiments, the prioritizations of the KPI targets may be indicated using weights with bounded limits, where the weights can be used to prioritize the KPI targets that take precedence. For example, in an embodiment, each of the KPI targets may be assigned a weight in the range [0,1] that indicates the degree to which the rule is important. In such an example, a value of 0 may indicate that the achievement of the KPI target is unimportant, while a value of 1 may indicate that the KPI target must be achieved regardless of other constraints.

In one embodiment, apparatus 10 may be controlled by memory 14 and processor 12 to automatically derive or determine, using the received objective model, a context model that may include at least a description of the properties of one or more contexts. In an embodiment, the context model may define the domain or possible values of the context properties. For example, in some embodiments, the contexts may include, but are not limited to, the time of day, a location of the cell, the cell type, and/or network states, as discussed above.

According to some embodiments, apparatus 10 may be controlled by memory 14 and processor 12 to combine the different contexts into context classes, such that each of the context classes may require a different action.

According to certain embodiments, apparatus 10 may be controlled by memory 14 and processor 12 to determine the context classes by building a complete context-space that may include a listing of possible contexts that may be derived from the context model. In an embodiment, each context property in the context model may represent a dimension on the context-space, for example, which may be continuous or discrete. In some embodiments, apparatus 10 may be controlled by memory 14 and processor 12 to divide the context-space into a finite number of context-space regions or context regions. Each context region may represent a region in the context-space having the same KPI targets and/or priorities. In addition, in some embodiments, apparatus 10 may be controlled by memory 14 and processor 12 to combine context regions having the same expected behavior for a certain KPI. As such, a context class type may be defined as the combination of dimensions, and the context class may be defined as the group of regions with the same targets and priority for a given context class type. In an embodiment, the context class type may be derived from the automation functions that define the different dimensions and regions of interest.

According to an embodiment, apparatus 10 may be controlled by memory 14 and processor 12 to compute the context regions. In an embodiment, apparatus 10 may be controlled by memory 14 and processor 12 to compute the context regions by partitioning the dimensions of the context-space according to the conditions of objective rules, e.g., where for each predicate p, the dimension of the context property in p is partitioned according to the value in p. The partitioning may be further refined with each rule that has a predicate with the same context. After partitioning the dimensions for all objective rules, apparatus 10 may be controlled by memory 14 and processor 12 to define the regions as the elements of the cross product of the partitions of all dimensions.

After creating the regions, in an embodiment, apparatus 10 may be controlled by memory 14 and processor 12 to create the context classes in consideration of the KPIs in the objective rules. First, a context-class type may be created for each KPI by combining the context-space's dimensions of interest for the KPI that are represented in the objective rules. To derive the context classes for the specific KPI, in an embodiment, apparatus 10 may be controlled by memory 14 and processor 12 to map the objective rules to the regions to mark each region with the expected KPI target and priority. As discussed above, if there is a conflict among the prioritized KPI targets, the higher priority target may be taken. Any context regions that remain unmarked after applying the rules may be classified as a single context class to apply a default global KPI target.

In certain embodiments, apparatus 10 may be further controlled by memory 14 and processor 12 to generate or select at least one of FCVs and/or NCPs according to the context model and/or objective model. According to certain embodiments, an automation function may be implemented with a pre-set number of operating modes, each of which indicates a different kind of behavior. In this case, apparatus 10 may be controlled by memory 14 and processor 12 to match the possible modes with the computed context classes. In an embodiment, apparatus 10 may be controlled by memory 14 and processor 12 to update the policy framework of the network with the configurations indicating this matching. Then, in one embodiment, apparatus 10 may be controlled by memory 14 and processor 12 to activate the respective FCV set for the specific mode in each of the context classes. In another embodiment, where the operating modes are not defined but more than one context-class has been identified, apparatus 10 may be controlled by memory 14 and processor 12 to learn the appropriate FCV sets for each of the context-classes.

According to some embodiments, apparatus 10 may be controlled by memory 14 and processor 12 to adjust and/or optimize a behavior of automation functions of the network using the generated FCVs and/or NCPs.

Therefore, certain example embodiments provide several technological improvements, enhancements, and/or advantages over existing technological processes and constitute an improvement at least to the technological field of wireless network control and management. For example, certain embodiments are able to automate the derivation of the network context-space, to automate the derivation of context-specific network automation functions configuration policies, and/or to automate the derivation of context-specific network configuration policies. These automatically derived policies and/or parameters may then be applied to optimize or adjust the behavior of automation functions of a network. Accordingly, the use of certain example embodiments results in improved functioning of communications networks and their nodes, such as base stations, eNBs, gNBs, and/or UEs or mobile stations.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the scope of example embodiments.

## Claims

1. A method performed by a context derivation function, CDF, (202), the method comprising:
receiving (600), from an operator, an objective model (200) including rules defining key performance indicator, KPI, targets and relative prioritizations of the KPI targets for a communications system; and
generating or selecting at least one of function configuration parameter values, FCVs, or network configuration parameter values, NCPs, according to a context model,
the method **characterized by** comprising:
automatically determining (610), using the received objective model (200), the context model including at least a description of properties of one or more contexts, wherein
the contexts are combined into context classes that each require a different action, and wherein the method comprises determining the context classes by building a complete context-space including a listing of possible contexts that may be derived from the context model,
the method comprises dividing the context-space into a finite number of context regions, wherein each of the context regions represent a region in the context-space having the same KPI targets or priorities,
the automatically determining of the context model comprises computing the context regions,
the computing of the context regions comprises partitioning dimensions of the context-space according to the conditions of objective rules, and
after partitioning the dimensions for the objective rules, the automatically determining of the context model comprises defining the context regions as elements of the cross product of the partitions of the dimensions,
in case an automation function is implemented with a pre-set number of operating modes that each indicate a different kind of behavior, the method comprises matching the operating modes with the context classes and the generating of the FCVs or NCPs comprises activating a respective FCV set for the specific operating mode in each of the context classes, and
in case operating modes are not defined and more than one context-class has been identified, the generating of the FCVs or NCPs comprises learning appropriate FCV sets for each of the context classes.

2. The method according to claim 1, wherein the objective model is implemented as a combination of operating conditions, the KPI targets, and a prioritization measure.

3. The method according to claim 1 or 2, wherein one or more of the KPI targets are assigned a weight that indicates a degree to which the rule defining the KPI target is important.

4. The method according to any of claims 1 to 3, wherein the context model defines a domain or possible values of the context properties.

5. The method according to any of claims 1 to 4, wherein the contexts comprise at least one of: a time of day, a location of a cell in the communications system, a type of the cell, service related information, or network states.

6. The method according to claim 1, wherein the automatically determining of the context model comprises creating the context classes in consideration of the KPIs in the objective rules.

7. The method according to claim 1, wherein the automatically determining of the context model comprises mapping the objective rules to the context regions to mark each region with the expected KPI target and priority.

8. The method according to any of claims 1 to 7, further comprising adjusting a behavior of automation functions of the communications system using the generated FCVs or NCPs.

9. A context derivation function, CDF, (202), comprising:
means for receiving, from an operator, an objective model (200) including rules defining key performance indicator, KPI, targets and relative prioritizations of the KPI targets for a communications system; and
means for generating or selecting at least one of function configuration parameter values, FCVs, or network configuration parameter values, NCPs, according to a context model,
**characterized by** comprising:
means for automatically determining, using the received objective model, a context model including at least a description of properties of one or more contexts, wherein
the contexts are combined into context classes that each require a different action, and wherein the CDF comprises means for determining the context classes by building a complete context-space including a listing of possible contexts that may be derived from the context model,
the CDF comprises means for dividing the context-space into a finite number of context regions, wherein each of the context regions represent a region in the context-space having the same KPI targets or priorities,
the means for automatically determining of the context model comprises means for computing the context regions,
the means for computing of the context regions comprises means for partitioning dimensions of the context-space according to the conditions of objective rules, and
after partitioning the dimensions for the objective rules, the means for automatically determining of the context model comprises means for defining the context regions as elements of the cross product of the partitions of the dimensions,
in case an automation function is implemented with a pre-set number of operating modes that each indicate a different kind of behavior, the CDF comprises means for matching the operating modes with the context classes and the means for generating of the FCVs or NCPs comprises means for activating a respective FCV set for the specific operating mode in each of the context classes, and
in case operating modes are not defined and more than one context-class has been identified, the means for generating of the FCVs or NCPs comprises means for learning appropriate FCV sets for each of the context classes.

10. A non-transitory computer readable medium comprising program instructions stored thereon, which when executed by a context derivation function, CDF, cause the CDF to perform at least the method according to any of claims 1 to 8.

## Patentansprüche

1. Verfahren, das von einer Kontextableitungsfunktion, CDF, (202) durchgeführt wird, wobei das Verfahren Folgendes umfasst:
Empfangen (600) eines objektiven Modells (200), das Regeln beinhaltet, die Schlüsselleistungsindikator(KPI)-Ziele und relative Priorisierungen der KPI-Ziele für ein Kommunikationssystem definieren, von einem Betreiber; und
Erzeugen oder Auswählen von mindestens einem von Funktionsauslegungsparameterwerten, FCVs, oder Netzwerkauslegungsparameterwerten, NCPs, gemäß einem Kontextmodell,
wobei das Verfahren **dadurch gekennzeichnet ist, dass** es Folgendes umfasst:
automatisches Bestimmen (610) des Kontextmodells, das mindestens eine Beschreibung von Eigenschaften von einem oder mehreren Kontexten beinhaltet, unter Verwendung des empfangenen objektiven Modells (200), wobei
die Kontexte zu Kontextklassen kombiniert werden, die jeweils eine andere Aktion erfordern, und wobei das Verfahren das Bestimmen der Kontextklassen durch Aufbauen eines vollständigen Kontextraums umfasst, der eine Auflistung von möglichen Kontexten beinhaltet, die vom Kontextmodell abgeleitet werden können,
das Verfahren das Teilen des Kontextraums in eine finite Anzahl von Kontextregionen umfasst, wobei jede der Kontextregionen eine Region im Kontextraum repräsentiert, die dieselben KPI-Ziele oder Prioritäten aufweist,
das automatische Bestimmen des Kontextmodells das Berechnen der Kontextregionen umfasst,
das Berechnen der Kontextregionen das Partitionieren von Dimensionen des Kontextraums gemäß den Bedingungen von objektiven Regeln umfasst, und
nach dem Partitionieren der Dimensionen für die objektiven Regeln das automatische Bestimmen des Kontextmodells das Definieren der Kontextregionen als Elemente des Kreuzprodukts der Partitionen der Dimensionen umfasst,
in einem Fall, in dem eine Automatisierungsfunktion mit einer voreingestellten Anzahl von Betriebsmodi implementiert wird, die jeweils eine andere Art des Verhaltens anzeigen, das Verfahren das Abgleichen der Betriebsmodi mit den Kontextklassen umfasst und das Erzeugen der FCVs oder der NCPs das Aktivieren eines jeweiligen FCV-Satzes für einen spezifischen Betriebsmodus in jeder der Kontextklassen umfasst, und
in einem Fall, in dem keine Betriebsmodi definiert sind und mehr als eine Kontextklasse identifiziert wurde, das Erzeugen der FCVs oder der NCPs das Lernen von angemessenen FCV-Sätzen für jede der Kontextklassen umfasst.

2. Verfahren nach Anspruch 1, wobei das objektive Modell als eine Kombination von Betriebsbedingungen, den KPI-Zielen und einem Priorisierungsmaß implementiert wird.

3. Verfahren nach Anspruch 1 oder 2, wobei ein oder mehrere der KPI-Ziele einer Gewichtung zugewiesen werden, die einen Wichtigkeitsgrad der das KPI-Ziel definierenden Regel anzeigt.

4. Verfahren nach einem der Ansprüche 1 bis 3, wobei das Kontextmodell eine Domäne oder mögliche Werte der Kontexteigenschaften definiert.

5. Verfahren nach einem der Ansprüche 1 bis 4, wobei die Kontexte mindestens eines von Folgendem umfassen: eine Tageszeit, einen Standort einer Zelle im Kommunikationssystem, eine Art der Zelle, dienstbezogene Informationen oder Netzwerkzustände.

6. Verfahren nach Anspruch 1, wobei das automatische Bestimmen des Kontextmodells das Erstellen der Kontextklassen unter Berücksichtigung der KPIs in den objektiven Regeln umfasst.

7. Verfahren nach Anspruch 1, wobei das automatische Bestimmen des Kontextmodells das Zuordnen der objektiven Regeln zu den Kontextregionen umfasst, um jede Region mit dem erwarteten KPI-Ziel und der erwarteten Priorität zu markieren.

8. Verfahren nach einem der Ansprüche 1 bis 7, das ferner das Anpassen eines Verhaltens von Automatisierungsfunktionen des Kommunikationssystems unter Verwendung der erzeugten FCVs oder NCPs umfasst.

9. Kontextableitungsfunktion, CDF, (202), die Folgendes umfasst:
Mittel zum Empfangen eines objektiven Modells (200), das Regeln beinhaltet, die Schlüsselleistungsindikator(KPI)-Ziele und relative Priorisierungen der KPI-Ziele für ein Kommunikationssystem beinhaltet, von einem Betreiber; und
Mittel zum Erzeugen oder Auswählen von mindestens einem von Funktionsauslegungsparameterwerten, FCVs, oder Netzwerkauslegungsparameterwerten, NCPs, gemäß einem Kontextmodell,
**dadurch gekennzeichnet, dass** sie Folgendes umfasst:
Mittel zum automatisches Bestimmen eines Kontextmodells, das mindestens eine Beschreibung von Eigenschaften von einem oder mehreren Kontexten beinhaltet, unter Verwendung des empfangenen objektiven Modells, wobei
die Kontexte zu Kontextklassen kombiniert werden, die jeweils eine andere Aktion erfordern, und wobei die CDF Mittel zum Bestimmen der Kontextklassen durch Aufbauen eines vollständigen Kontextraums umfasst, der eine Auflistung von möglichen Kontexten beinhaltet, die vom Kontextmodell abgeleitet werden können,
die CDF Mittel zum Teilen des Kontextraums in eine finite Anzahl von Kontextregionen umfasst, wobei jede der Kontextregionen eine Region im Kontextraum repräsentiert, die dieselben KPI-Ziele oder Prioritäten aufweist,
die Mittel zum automatischen Bestimmen des Kontextmodells Mittel zum Berechnen der Kontextregionen umfassen,
die Mittel zum Berechnen der Kontextregionen Mittel zum Partitionieren von Dimensionen des Kontextraums gemäß den Bedingungen von objektiven Regeln umfassen, und
nach dem Partitionieren der Dimensionen für die objektiven Regeln die Mittel zum automatischen Bestimmen des Kontextmodells Mittel zum Definieren der Kontextregionen als Elemente des Kreuzprodukts der Partitionen der Dimensionen umfassen,
in einem Fall, in dem eine Automatisierungsfunktion mit einer voreingestellten Anzahl von Betriebsmodi implementiert wird, die jeweils eine andere Art des Verhaltens anzeigen, die CDF Mittel zum Abgleichen der Betriebsmodi mit den Kontextklassen umfasst und die Mittel zum Erzeugen der FCVs oder der NCPs Mittel zum Aktivieren eines jeweiligen FCV-Satzes für einen spezifischen Betriebsmodus in jeder der Kontextklassen umfassen, und
in einem Fall, in dem keine Betriebsmodi definiert sind und mehr als eine Kontextklasse identifiziert wurde, die Mittel zum Erzeugen der FCVs oder der NCPs Mittel zum Lernen von angemessenen FCV-Sätzen für jede der Kontextklassen umfassen.

10. Nichttransitorisches computerlesbares Medium, das darauf gespeicherte Programmanweisungen umfasst, die, wenn sie von einer Kontextableitungsfunktion, CDF, ausgeführt werden, die CDF veranlassen, mindestens das Verfahren nach einem der Ansprüche 1 bis 8 durchzuführen.

## Revendications

1. Procédé réalisé par une fonction de dérivation de contexte, CDF, (202), le procédé comprenant :
la réception (600), d'un opérateur, d'un modèle d'objectif (200) comportant des règles définissant des cibles d'indicateurs clés de performance, KPI, et des priorisations relatives des cibles KPI pour un système de communication ; et
la génération ou la sélection de valeurs de paramètre de configuration de fonction, FCV, et/ou de valeurs de paramètre de configuration de réseau, NCP, selon un modèle de contexte,
le procédé étant **caractérisé en ce qu'**il comprend :
la détermination automatique (610), à l'aide du modèle d'objectif (200) reçu, du modèle de contexte comportant au moins une description des propriétés d'un ou plusieurs contextes, dans lequel
les contextes sont combinés en classes de contexte qui requièrent chacune une action différente, et dans lequel le procédé comprend la détermination des classes de contexte en construisant un espace de contextes complet comportant une liste de contextes possibles qui peuvent être dérivés du modèle de contexte,
le procédé comprend la division de l'espace de contextes en un nombre fini de régions de contextes, dans lequel chacune des régions de contextes représente une région dans l'espace de contextes ayant les mêmes cibles ou priorités KPI,
la détermination automatique du modèle de contexte comprend le calcul des régions de contextes,
le calcul des régions de contextes comprend la partition des dimensions de l'espace de contextes selon les conditions des règles d'objectifs, et
après avoir partitionné les dimensions en fonction des règles d'objectifs, la détermination automatique du modèle de contexte comprend la définition des régions de contextes comme des éléments du produit croisé des partitions des dimensions,
dans le cas où une fonction d'automatisation est mise en œuvre avec un nombre préfixé de modes de fonctionnement qui indiquent chacun un genre de comportement différent, le procédé comprend l'appariement des modes de fonctionnement avec les classes de contexte, et la génération des FCV ou des NCP comprend l'activation d'un ensemble de FCV respectif pour le mode de fonctionnement spécifique dans chacune des classes de contexte, et
dans le cas où les modes de fonctionnement ne sont pas définis et que plus d'une classe de contexte a été identifiée, la génération des FCV ou des NCP comprend l'apprentissage d'ensembles de FCV appropriés pour chacune des classes de contexte.

2. Procédé selon la revendication 1, dans lequel le modèle d'objectif est mis en œuvre sous la forme d'une combinaison de conditions de fonctionnement, de cibles KPI, et d'une mesure de priorisation.

3. Procédé selon la revendication 1 ou 2, dans lequel une ou plusieurs des cibles KPI se voient attribuer un poids qui indique le degré d'importance de la règle définissant la cible KPI.

4. Procédé selon l'une des revendications 1 à 3, dans lequel le modèle de contexte définit un domaine ou des valeurs possibles des propriétés de contexte.

5. Procédé selon l'une des revendications 1 à 4, dans lequel les contextes comprennent au moins un parmi : une heure dans la journée, un emplacement d'une cellule dans le système de communication, un type de cellule, des informations relatives au service ou des états de réseau.

6. Procédé selon la revendication 1, dans lequel la détermination automatique du modèle de contexte comprend la création des classes de contexte en tenant compte des KPI dans les règles d'objectifs.

7. Procédé selon la revendication 1, dans lequel la détermination automatique du modèle de contexte comprend le mappage des règles d'objectifs aux régions de contextes pour marquer chaque région avec la cible et la priorité KPI attendue.

8. Procédé selon l'une des revendications 1 à 7, comprenant en outre le réglage du comportement des fonctions d'automatisation du système de communication à l'aide des FCV ou NCP générés.

9. Fonction de dérivation de contexte, CDF, (202), comprenant :
un moyen pour recevoir, d'un opérateur, un modèle d'objectif (200) comportant des règles définissant des cibles d'indicateurs clés de performance, KPI, et des priorisations relatives des cibles KPI pour un système de communication ; et
un moyen pour générer ou sélectionner des valeurs de paramètre de configuration de fonction, FCV, et/ou des valeurs de paramètre de configuration de réseau, NCP, selon un modèle de contexte,
**caractérisée en ce qu'**elle comprend :
un moyen pour déterminer automatiquement, à l'aide du modèle d'objectif reçu, un modèle de contexte comportant au moins une description des propriétés d'un ou plusieurs contextes, dans laquelle
les contextes sont combinés en classes de contexte qui requièrent chacune une action différente, et dans laquelle la CDF comprend un moyen pour déterminer les classes de contexte en construisant un espace de contextes complet comportant une liste de contextes possibles qui peuvent être dérivés du modèle de contexte,
la CDF comprend un moyen pour diviser l'espace de contextes en un nombre fini de régions de contextes, dans laquelle chacune des régions de contextes représente une région dans l'espace de contextes ayant les mêmes cibles ou priorités KPI,
le moyen pour déterminer automatiquement le modèle de contexte comprend un moyen pour calculer les régions de contextes,
le moyen pour calculer les régions de contextes comprend un moyen pour partitionner les dimensions de l'espace de contextes selon les conditions des règles d'objectifs, et
après avoir partitionné les dimensions en fonction des règles d'objectifs, le moyen pour déterminer automatiquement le modèle de contexte comprend un moyen pour définir les régions de contextes comme des éléments du produit croisé des partitions des dimensions,
dans le cas où une fonction d'automatisation est mise en œuvre avec un nombre préfixé de modes de fonctionnement qui indiquent chacun un genre de comportement différent, la CDF comprend un moyen pour apparier les modes de fonctionnement avec les classes de contexte, et le moyen pour générer les FCV ou les NCP comprend un moyen pour activer un ensemble de FCV respectif pour le mode de fonctionnement spécifique dans chacune des classes de contexte, et
dans le cas où les modes de fonctionnement ne sont pas définis et que plus d'une classe de contexte a été identifiée, le moyen pour générer les FCV ou les NCP comprend un moyen pour apprendre des ensembles de FCV appropriés pour chacune des classes de contexte.

10. Support non transitoire lisible par ordinateur comprenant des instructions de programme stockées à l'intérieur, qui, lorsqu'elles sont exécutées par une fonction de dérivation de contexte, CDF, amènent la CDF effectuer au moins le procédé selon l'une des revendications 1 à 8.
